# EUROPEAN PATENT APPLICATION

(11) **EP 4 806 947 A1**
(43) Date of publication of application: **16.09.2026**
(21) Application number: 24888850.5
(22) Date of filing: 18.04.2024
(51) Int. Cl.: C08J 9/00, C08J 9/04, C08K 5/03, C08K 3/013, H01M 10/658

(54) **FLAME RETARDANT RESIN MIXTURE-CONTAINING INSULATION AND FIRE-EXTINGUISHING MATERIAL FOR SECONDARY BATTERIES AND MANUFACTURING METHOD THEREOF**

(30) Priority: 09.11.2023 KR 20230154459
(71) Applicant: Cessmat Co., Ltd., Suwon-si, Gyeonggi-do 16419 (KR)
(72) Inventor: KIM, Ki Jae, Suwon-si, Gyeonggi-do 16419 (KR); KWON, Yong Kab, Suwon-si, Gyeonggi-do 16419 (KR); PARK, Yu Won, Suwon-si, Gyeonggi-do 16419 (KR)
(74) Representative: RGTH
(86) International application number: PCT/KR2024/005224
(87) International publication number: WO 2025/100647

(57) **Abstract**

The present invention relates to a heat-insulating fire-extinguishing material for secondary batteries comprising a polymer mixture and a method of manufacturing the same, the object thereof being to provide an expansion-buffering secondary battery cell and heat-insulating fire-extinguishing foam for modules that has superior heat insulating properties than the film form and provides compression characteristics for responding to pressure increases within cells by introducing a polymer foam comprising a flame retardant as a heat transfer delay material between secondary battery cells/modules, wherein a halogen-based flame retardant and an inorganic metal compound are added to a flexible silicone resin having excellent processability, then foamed to be manufactured in the form of a foam, and the foam thus manufactured is provided as a heat insulating and fire-extinguishing means between secondary battery cells/modules with expansion-buffering characteristics.

## Description

### [Technical Field]

The present invention relates to a safety-enhancing pad for secondary batteries between secondary battery cells/modules manufactured using a flame-retardant resin mixture comprising various flame-retardant materials, and more particularly, to a heat-insulating fire extinguishing material for secondary batteries comprising a novel polymer mixture that may be used for manufacturing an inter cell/module safety-enhancing pad for secondary batteries configured to reduce the risk of ignition and explosion due to heat transfer delay and thermal runaway between cell/cell or module/module of secondary batteries, and a method of manufacturing the same.

### [Background Art]

Currently commercialized secondary batteries are widely used in a range of applications from small to large electronic devices and medium to large-scale equipment such as vehicles, ships, and aircraft as transportation means and energy storage devices.

In particular, lithium-based secondary batteries, which are easy to charge/discharge and have a high energy density, have been widely used for portable electronic devices such as mobile phones and laptops that require high capacity/portability since the early stages of commercialization; however, recently, due to the increasing demand for high energy in medium to large-scale devices such as automobiles and ESSs, demand has been growing enormously as they have begun to be applied in the form of battery modules/packs that achieve high voltage/high capacity by connecting a plurality of lithium secondary battery cells.

Since lithium secondary batteries adopt an organic electrolyte to achieve high energy and use flammable oxide cathode/carbon material anode materials, the risk of fire accidents is always present, and there is a possibility of self-ignition during improper use of batteries (overcharging, short circuit, penetration, etc.); therefore, particularly in module/pack systems in which multiple cells are integrated, there is a possibility of a cascading fire resulting from the ignition of a single cell leading to continuous thermal runaway through heat transfer to adjacent cells.

To prevent thermal runaway in which ignition of a single cell escalates into a large-scale fire, a method has been proposed of placing mica sheets having high chemical resistance and high-temperature insulating properties between cells/modules.

However, since mica is a mineral material, it is heavy and inflexible and is not easy to form into a desired shape, making it difficult to apply according to various cell requirements; furthermore, since it has only physical heat insulating properties, it has no resistance to the generation of flammable gases and the resulting secondary explosions that accompany the occurrence of a secondary battery fire.

Meanwhile, the expansion-buffering battery pad represented by polyurethane-based pads currently used between cells is used for the purpose of preventing an increase in pressure due to battery swelling that occurs in emergencies, and while it requires an excellent compressibility against external pressure, the mica sheet has a critical disadvantage in that it cannot replace such pads.

Research is being conducted to apply flexible and lightweight insulating materials to replace the mica sheet, and a representative ceramic aerogel material among these exhibits excellent heat insulating performance due to its high fire resistance characteristics and pore structure features. However, due to inevitable dust emission, there are distinct constraints in application and processing, and significant costs are required to fabricate the distinctive structure. In addition, there are limitations in completely replacing the expansion-buffering battery pad since there are no buffering characteristics against expansion at all.

Accordingly, efforts are being made to apply flexible and lightweight heat insulating materials in place of the above candidates.

### [Disclosure of Invention]

### [Technical Problem]

The present invention is directed to providing a novel flame-retardant resin composition for manufacturing a heat-insulating fire-extinguishing material for the purpose of enhancing safety, which includes heat insulating and fire-extinguishing properties for preventing thermal runaway due to fire resulting from ignition of a secondary battery.

The present invention is also directed to providing a heat-insulating fire-extinguishing film having enhanced safety as an inter-cell/module heat insulating and flame-retardant material for lithium secondary batteries that is applicable to various secondary battery form factors and easy to process, which, as an inter-cell/module heat-insulating fire-extinguishing material for lithium secondary batteries manufactured using the flame-retardant resin composition, delays heat transfer caused by ignition of secondary batteries through a heat insulating function, suppresses the generation of flammable gases that cause an explosion due to the radical trapping function of a bromine-based flame retardant along with a fire-extinguishing effect when a battery fire occurs.

The present invention is also directed to providing a heat-insulating fire-extinguishing material in the form of a foam comprising fire-extinguishing capability while providing, in addition to heat insulating properties, compression properties for responding to pressure increases within cells, and to providing a polymer-based flame-retardant foam comprising a flame-retardant material as a heat transfer delay material between secondary battery cells/modules, thereby preventing heat transfer to the surroundings due to ignition of a single secondary battery cell, preventing cascading thermal runaway, and simultaneously minimizing direct combustion reactions by the flame-retardant/ fire-extinguishing materials inside the foam, and to providing a secondary battery cell and heat-insulating fire-extinguishing foam for modules based on a silicone resin that is flexible and has excellent processability according to various demands.

### [Technical Solution]

The present invention proposes a flame-retardant resin composition comprising a silicone-based resin, decabromodiphenylethane (DBDPE), and calcium carbonate (CaCO₃).

In this case, the silicone-based resin may comprise one or more selected from polydimethylsiloxane (PDMS), polymethylhydrosiloxane (PMHS), and polymethylphenylsiloxane (PMPS).

In addition, the flame-retardant resin composition may comprise (i) 50 to 70 wt% of polydimethylsiloxane and (ii) 30 to 50 wt% of a mixture of decabromodiphenylethane and calcium carbonate, wherein the atomic ratio of bromine (Br) and calcium (Ca) in the mixture of decabromodiphenylethane and calcium carbonate is preferably 4:1.

In another aspect of the invention, the present invention proposes a heat insulating and fire-extinguishing film manufactured by curing the flame-retardant resin composition, and the heat insulating and fire-extinguishing film may be used as a safety-enhancing pad between secondary battery cells/modules, such as lithium secondary batteries.

In addition, the heat-insulating fire-extinguishing material for secondary batteries comprising the flame-retardant resin mixture of the present invention proposes a heat-insulating fire-extinguishing foam for secondary batteries having a pore structure with expansion-buffering characteristics and comprising a flame-retardant resin mixture.

In the present invention, the heat-insulating fire-extinguishing foam for secondary batteries having a pore structure with expansion-buffering characteristics and comprising a flame-retardant resin mixture,
(a) provides fire-extinguishing capability by comprising a flame-retardant material in a resin foam;
(b) is manufactured in the form of a foam through a foaming process, providing a compressibility (for battery swelling resistance) for the inter-cell pad and, in normal operation, providing heat dissipation characteristics through heat radiation to the outside by means of the pore structure within the polymer;
(c) uses a halogen-based compound as a representative flame retardant to effectively prevent combustion by reducing activity through reaction with flammable gases generated during combustion; and
(d) uses an inorganic flame retardant to inhibit combustion through reduction in heat release by thermal energy consumption during the thermal decomposition process and dilution of flammable gases by gas generation, and provides the capability of trapping halogens after reaction, as its technical objective.

The heat-insulating fire-extinguishing foam for secondary batteries having a pore structure with expansion-buffering characteristics of the present invention is a secondary battery heat-insulating fire-extinguishing pad manufactured from a flame-retardant resin composition,
wherein a foaming agent is added to a flame-retardant resin mixture comprising a siloxane-based silicone resin, a halogen-based flame retardant, and an inorganic metal compound flame retardant and mixed, then formed into a predetermined shape and cured to be manufactured in the form of a foam having a pore structure with expansion-buffering characteristics.

The method of manufacturing the heat-insulating fire-extinguishing foam for secondary batteries having a pore structure with expansion-buffering characteristics and comprising the flame-retardant resin mixture of the present invention comprises:
mixing a halogen-based flame retardant and an inorganic metal compound with a silicone resin, adding a foaming agent to the silicone resin mixture comprising the halogen-based flame retardant and the inorganic metal compound and uniformly mixing to produce a slurry-type resin mixture, forming the produced resin mixture into a predetermined shape, and curing at a predetermined temperature for a predetermined period of time to manufacture a heat-insulating fire-extinguishing foam for secondary batteries having a pore structure with expansion-buffering characteristics.

The method of manufacturing the heat-insulating fire-extinguishing foam for secondary batteries having a pore structure with expansion-buffering characteristics and comprising the flame-retardant resin mixture of the present invention further comprises mixing a foaming aid for densifying the pore structure into the silicone resin mixture comprising the halogen-based flame retardant and the inorganic metal compound.

The method of manufacturing the heat-insulating fire-extinguishing foam for secondary batteries having a pore structure with expansion-buffering characteristics and comprising the flame-retardant resin mixture of the present invention further comprises mixing a second solvent for maintaining a uniform surface condition into the silicone resin mixture comprising the halogen-based flame retardant and the inorganic metal compound.

The method of manufacturing the heat-insulating fire-extinguishing foam for secondary batteries having a pore structure with expansion-buffering characteristics and comprising the flame-retardant resin mixture of the present invention further comprises mixing the silicone resin mixture comprising the halogen-based flame retardant and the inorganic metal compound at a higher resin ratio relative to the curing agent for the purpose of increasing the compressibility.

### [Advantageous Effects]

According to the present invention as described above, the inter-cell/module heat-insulating fire-extinguishing film for lithium secondary batteries based on a silicone resin matrix is lighter and more flexible than conventional battery insulating materials, provides fire resistance and heat insulating performance to the silicone resin film by the halogen-based flame retardant and simultaneously has a fire-extinguishing effect, and exhibits enhanced fire-extinguishing capability by using calcium carbonate (CaCO₃), which is inexpensive and not environmentally harmful, instead of the costly and environmentally harmful antimony trioxide (Sb₂O₃).

In particular, among halogen-based flame retardants included as a flame retardant in the inter-cell/module heat-insulating fire-extinguishing film for lithium secondary batteries according to the present invention, DBDPE is non-hygroscopic and maintains a stable phase, but in a high-temperature environment caused by heat generation and overheating, etc., it may react with calcium carbonate (CaCO₃) to form calcium bromide (CaBr₂) having excellent fire-extinguishing properties, thereby imparting enhanced fire-extinguishing capability to the film.

In addition, according to the present invention, by applying a flame retardant combination having a chemical synergistic effect in both the gas phase and the condensed phase, the inter-cell and inter-module heat insulating and fire-extinguishing means for secondary batteries may be provided in the form of a foam having a pore structure with a high compressibility, thereby providing an excellent heat insulating and fire-extinguishing means having expansion-buffering characteristics.

### [Brief Description of Drawings]

FIG. 1 is a view showing the test results of a flame-retardant property of a PDMS film manufactured from a flame-retardant resin composition according to a first embodiment of the present invention.
FIG. 2 is a view showing the results of evaluating the fire-extinguishing capability of a PDMS film manufactured from a flame-retardant resin composition according to the first embodiment of the present invention according to the content ratio of DBDPE and CaCO₃.
FIG. 3 is a view showing a heat transfer test method for a PDMS film manufactured from a flame-retardant resin composition according to the first embodiment of the present invention [(a) flame-contact heat transfer evaluation, and (b) flame-non-contact heat transfer evaluation].
FIG. 4 is a graph showing the results of heat transfer evaluation conducted on PDMS, PDMS with 50 wt% DBDPE+CaCO₃ added, and a ceramic fiber material heat insulating pad, each having a thickness of 3 mm, according to the first embodiment of the present invention [(a) flame-contact heat transfer evaluation, and (b) flame-non-contact heat transfer evaluation].
FIG. 5 shows the results of a UL-94 simulated test conducted on two specimens in the first embodiment: (a) a PDMS film containing 50 wt% DBDPE+CaCO₃ coated with a flammable material (PMMA), and (b) a commercial ceramic fiber heat insulating pad.
FIG. 6 is a view showing the manufacturing method of the heat-insulating fire-extinguishing foam for secondary batteries having a pore structure with expansion-buffering characteristics and comprising a flame-retardant resin mixture according to a second embodiment of the present invention.
FIG. 7 is a view showing the form of the pore structure depending on whether a foaming agent is added in the second embodiment of the present invention.
FIG. 8 is a view showing a change in pore distribution due to the addition of a foaming aid in the second embodiment of the present invention.
FIG. 9 is a view showing a surface change of the fire-extinguishing foam due to the introduction of the second solvent in the second embodiment of the present invention, wherein (a) shows the surface of the fire-extinguishing foam in Experiment 6 in which the second solvent is not added, and (b) shows the surface of the fire-extinguishing foam in Experiment 9 in which the second solvent is added.
FIG. 10 is a view showing the results of the flame-retardant performance evaluation of the fire-extinguishing foam in the second embodiment of the present invention.
FIG. 11 is a view showing a comparison of fire-extinguishing evaluation results of the fire-extinguishing foam and a commercial flame-retardant film in the second embodiment of the present invention.
FIG. 12 shows the test method for heat transfer evaluation in the second embodiment of the present invention, and FIG. 13 is a view showing the results of the heat transfer evaluation test as shown in FIG. 12.

### [Best Mode for Carrying out the Invention]

First, the terms used in the present specification and claims have been selected as general terms in consideration of functions in various embodiments of the present invention. However, such terms may vary depending on the intent of a person skilled in the art, legal or technical interpretation, or the emergence of new technology. In addition, some terms may be terms arbitrarily selected by the applicant. Such terms may be interpreted with the meanings defined in the present specification, and if no specific term definition is provided, may be interpreted based on the overall content of the present specification and common technical knowledge in the relevant technical field.

In addition, it should be understood that the embodiments described in the present specification and the configurations shown in the drawings are merely preferred embodiments of the present invention and do not represent all of the technical spirit of the present invention, and that there may be various equivalents and modifications that may replace them at the time of the present application.

In the present specification, singular expressions include plural expressions unless the context clearly dictates otherwise. In the present application, terms such as 'comprise' or 'constitute' are intended to designate the presence of features, numbers, steps, actions, components, parts, or combinations thereof described in the specification, and are to be understood as not precluding in advance the possibility of the presence or addition of one or more other features, numbers, steps, actions, components, parts, or combinations thereof.

Hereinafter, the present invention will be described in more detail with reference to embodiments.

### <First Embodiment>

In the present embodiment, a flame-retardant resin composition was manufactured by adding decabromodiphenylethane (DBDPE) as a flame retardant, which is less environmentally harmful, to a flexible polydimethylsiloxane (PDMS) polymer matrix that is easy to process into films, has excellent mechanical properties and chemical stability, and non-toxicity, and adding calcium carbonate (CaCO₃), which is non-toxic and low-cost, instead of antimony trioxide (Sb₂O₃), which is toxic and expensive, for the purpose of a catalyst, and a heat-insulating fire-extinguishing film that may be used as a safety-enhancing pad between lithium secondary battery cells/modules was manufactured by curing this composition.

For reference, DBDPE included as a flame retardant in the flame-retardant resin composition does not generate dioxin by-products since there is no ether bond, and therefore does not cause environmental pollution by ether-containing compounds such as dioxins, making it free from environmental regulations, and calcium carbonate, which is included as a flame-retardant catalyst, is a substitute for antimony trioxide that is known to function as a catalyst for conventional bromine-based flame retardants to enhance flame retardancy, and has the characteristics of being inexpensive and non-toxic.

In the present embodiment, to manufacture a film having an optimal heat insulating and fire-extinguishing effect, a flame-retardant resin composition was manufactured while adjusting the content of PDMS and DBDPE and the ratio of the DBDPE flame retardant and the CaCO₃ catalyst, and a heat-insulating fire-extinguishing film was manufactured using this composition.

In addition, in the present embodiment, fire resistance evaluation and heat insulating property evaluation through heat transfer rate measurement were conducted on the heat-insulating fire-extinguishing film manufactured as described above, and a flammable material was coated on the heat-insulating fire-extinguishing film to confirm the fire-extinguishing capability, and based on these results, the applicability as a secondary battery safety enhancement material having heat insulating and fire-extinguishing functions was examined.

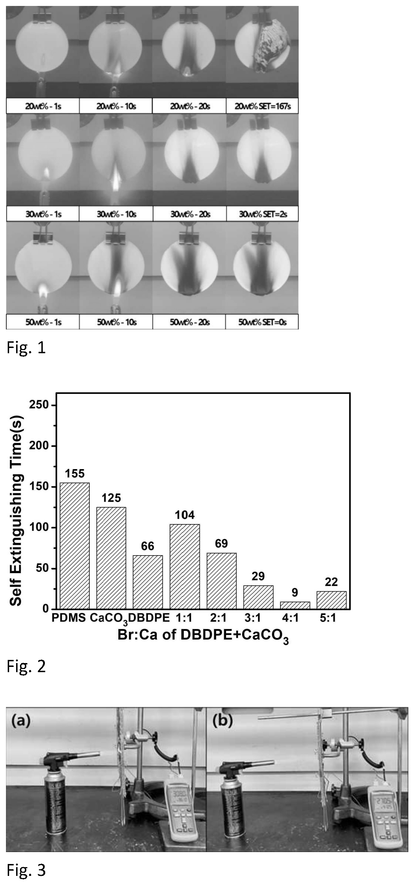

First, the flame-retardant properties and fire-extinguishing capability were evaluated through a UL-94 simulated test, which is a representative flame-retardant evaluation test for a film made by mixing a powder comprising DBDPE and CaCO₃ with PDMS at a certain ratio. A flame was applied to each film for 10 seconds, and then the combustion time after flame removal (=SET, self-extinguishing time) was measured. The results of the flame-retardant test according to DBDPE content are shown in FIG. 1.

Referring to FIG. 1, it was found that fire resistance increases as the DBDPE content increases, and films with a DBDPE content of 30 wt% or more have high flame-retardant properties in which fire barely ignites. It was also confirmed that the film with a high DBDPE concentration of 50 wt% does not easily catch fire.

To explore the optimal ratio of DBDPE and CaCO₃, DBDPE and CaCO₃ were mixed in various ratios, added to PDMS, cured, and films with 15 wt% (solid content ratio) were manufactured and experiments were conducted, and the results are shown in FIG. 2.

As can be seen in FIG. 2, the best flame retardancy was exhibited when DBDPE and CaCO₃ were mixed at a ratio satisfying a molar ratio of Br:Ca=4:1, and compared to the case where only DBDPE was added (177 seconds), a very short extinguishing time (12 seconds) was exhibited, indicating that CaCO₃ serves as an effective flame-retardant catalyst.

In addition, to analyze whether heat transfer between cells can be effectively prevented in an actual fire situation, a test method for heat transfer measurement was developed as described below, and heat transfer measurement was conducted accordingly.

A torch was used to apply a flame to the front face of a 125 mm×125 mm film fixed with a metal grate, and a Thermometer (FLUKE 51 II by FLUKE) and a K-type thermocouple were used to record the temperature of the back side of the sample. When the torch was ignited, the flame length was maintained at a specific distance, and the distance between the torch ignition port and the front face of the product was adjusted to evaluate both the situation where the flame contacts and the situation where it does not contact (see FIG. 3).

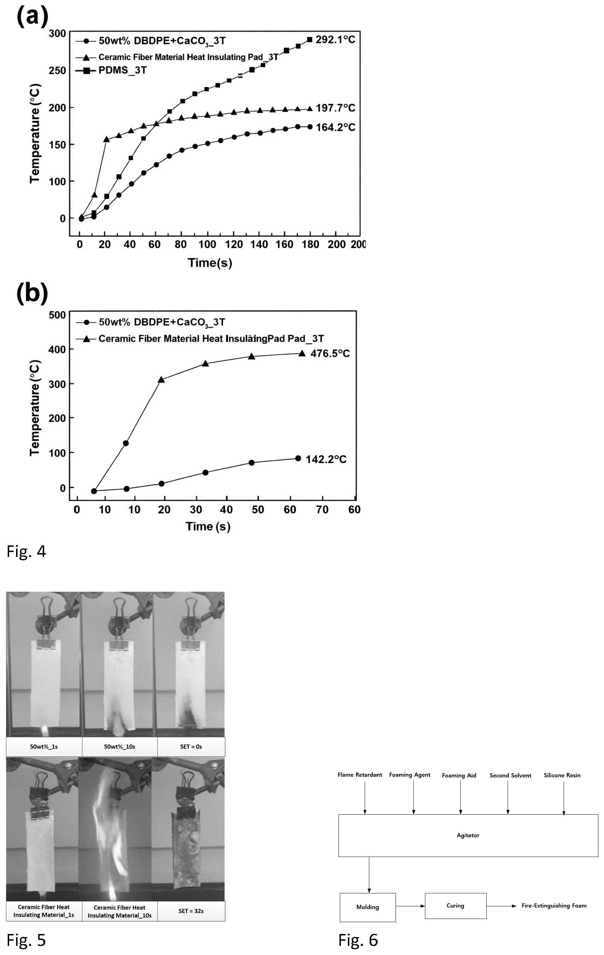

For heat transfer evaluation based on the heat transfer evaluation test method, the optimum-ratio film (PDMS film with 50 wt% DBDPE+CaCO₃ added) was processed to 125 mm×125 mm, and flame-contact and flame-non-contact heat transfer evaluation tests were conducted, and the rear surface temperatures obtained as results were graphed over time and compared with a ceramic fiber material heat insulating pad (CERAKWOOL) of the same thickness, and the results are shown in FIG. 4.

As can be seen in FIG. 4, the heat insulating performance of the optimum-ratio film was excellent compared to the prior art, and in particular, the heat insulating performance was excellent even at low temperatures, so the initial temperature rise was slow. Considering that in the case of lithium secondary batteries, the cathode decomposes at around 150°C and the onset temperature of thermal runaway is lower than this, the optimum-ratio film with a slow initial temperature rise may be considered suitable as a safety-enhancing pad between cells/modules of lithium secondary batteries.

Next, to evaluate the fire-extinguishing capability of the film manufactured in the present embodiment, a UL-94 simulated test was conducted after coating the optimum-ratio film and a ceramic fiber material heat insulating pad as the prior art each with PMMA, which is a flammable polymer.

As shown in FIG. 5, in the case of the optimum-ratio film, the fire did not ignite even after 10 seconds of flame contact and was immediately extinguished, recording a SET (Self Extinguishing Time) of 0 seconds, whereas in the case of the ceramic fiber material heat insulating pad, the fire ignited after 10 seconds of flame contact, recording a SET of 32 seconds. Therefore, unlike the prior art, it was confirmed that the film according to the present invention manufactured at the optimum ratio exhibits a fire-extinguishing effect.

### <Second Embodiment>

In the case of the polymer composite-based film of the first embodiment of the present invention as described above, various processes may be applied based on the polymer properties, enabling response to various battery types and allowing free introduction of functional materials including flame-retardant materials, whereas there are shortcomings in that the compression characteristics are poor for responding to pressure increases within cells.

The second embodiment of the present invention is intended to provide, in consideration of this, a heat-insulating fire-extinguishing foam in the form of a foam having a pore structure with expansion-buffering characteristics that has high compression characteristics including the characteristics of a high-compressibility pad applied between cells for responding to pressure increases occurring within cells and has fire-extinguishing capability.

In the second embodiment of the present invention, the heat-insulating fire-extinguishing foam for secondary batteries having a pore structure with expansion-buffering characteristics and comprising a flame-retardant resin mixture is manufactured by mixing a siloxane-based silicone resin having excellent heat resistance and flexibility with a flame-retardant material (a halogen-based compound flame retardant and an inorganic metal compound flame retardant) in a predetermined ratio and foaming the mixture into the form of a foam having an excellent compressibility.

The heat-insulating fire-extinguishing foam for secondary batteries having a pore structure with expansion-buffering characteristics and comprising a flame-retardant resin mixture according to the second embodiment of the present invention comprises:
adding a foaming agent to a flame-retardant resin mixture comprising a siloxane-based silicone resin having excellent heat resistance and flexibility, a halogen-based flame retardant, and an inorganic metal compound flame retardant and mixing, then forming into a predetermined shape and curing at a predetermined temperature for a predetermined period of time to be manufactured in the form of a pad for cells and modules.

The silicone resin may be polydimethylsiloxane (PDMS) that is siloxane-based and has excellent heat resistance and flexibility.

The halogen-based flame retardant may be composed of a bromine-based flame retardant represented by decabromodiphenylethane (DBDPE), and may comprise a type that does not generate harmful dioxins, such as a brominated epoxy oligomer, and tetrabromobisphenol A, which generates less harmful dioxins and currently has the highest demand.

The inorganic metal compound flame retardant may comprise at least one selected from the group consisting of oxides, hydroxides, carbonates, sulfates, phosphates, and the like thereof, comprising alkaline earth metals such as magnesium and calcium, Group 3 metals on the periodic table represented by aluminum, and transition metals represented by copper, manganese, nickel.

The foaming agent may be composed of alcohols such as methanol, ethanol, (iso)propanol, and hexanol.

The heat-insulating fire-extinguishing foam for secondary batteries having a pore structure with expansion-buffering characteristics and comprising the flame-retardant resin mixture of the present invention may further mix a foaming aid with the flame-retardant resin mixture in order to densify the pore structure.

The foaming aid may be composed of one of magnesium sulfate, zeolite, and the like.

In addition, the heat-insulating fire-extinguishing foam for secondary batteries having a pore structure with expansion-buffering characteristics and comprising the flame-retardant resin mixture of the present invention may further mix a second solvent with the flame-retardant resin mixture for the purpose of surface modification.

The second solvent may be composed of water.

In addition, the heat-insulating fire-extinguishing foam for secondary batteries having a pore structure with expansion-buffering characteristics and comprising the flame-retardant resin mixture of the present invention may further mix a higher resin ratio relative to the curing agent with the flame-retardant resin mixture in order to increase the compressibility.

The heat-insulating fire-extinguishing foam for secondary batteries having a pore structure with expansion-buffering characteristics according to the second embodiment of the present invention may be manufactured by:
mixing 10 g of silicone resin, 10 g of halogen-based flame retardant and inorganic metal compound, 2 g of foaming agent, 0.5 g of foaming aid, 1 g of second solvent, and 1 g of curing agent, then forming into a predetermined shape and curing.

Hereinafter, a method of manufacturing the heat-insulating fire-extinguishing foam for secondary batteries having a pore structure with expansion-buffering characteristics and comprising the flame-retardant resin mixture of the present invention will be specifically described with reference to the embodiment shown in attached FIG. 6.

FIG. 6 is a view showing the manufacturing process of the heat-insulating fire-extinguishing foam of the present invention.

The method of manufacturing the fire-extinguishing foam of the second embodiment of the present invention comprises:
mixing a halogen-based flame retardant and an inorganic metal compound with a silicone resin;
adding a foaming agent to the silicone resin mixture comprising the halogen-based flame retardant and the inorganic metal compound and uniformly mixing to produce a slurry-type resin mixture;
forming it into a predetermined shape using a doctor blade; and
curing it at a predetermined temperature for a predetermined period of time to manufacture the foam.

The fire-extinguishing foam according to the second embodiment of the present invention is technically characterized in that:
it uses a halogen-based compound as a flame retardant to effectively prevent combustion by reducing the activity of flammable gases generated during combustion; it simultaneously uses an inorganic metal compound flame retardant to inhibit combustion through reduction in heat release via thermal energy consumption during thermal decomposition and dilution of flammable gases by gas generation, and to trap halogen mixtures after reaction; and it is manufactured in the form of a foam having a pore structure through a foaming process, thereby providing a compressibility for inter-cell pads for battery swelling resistance and heat dissipation characteristics through the pore structure within the polymer during normal operation.

The fire-extinguishing foam of the second embodiment of the present invention may be manufactured by:
mixing silicone resin and the mixture of halogen-based flame retardant (DBDPE) and inorganic metal compound (CaCO₃) at a weight ratio of 1:1, and a foaming agent may be added thereto.

The slurry-type resin mixture may be manufactured by mixing 10 g of silicone resin, 10 g of flame retardant (DBDPE-CaCO₃), and 2 g of foaming agent by weight ratio, and the resulting mixture may be formed to a predetermined size and shape, and cured at a predetermined temperature for a predetermined period of time.

According to this, 10 g of flame retardant (DBDPE-CaCO₃) mixture may be mixed with 10 g of silicone resin as a reference, and 2 g of foaming agent is added and agitated at a speed of 100 rpm to 800 rpm for 10 seconds to 120 seconds, then formed to a thickness of 2 mm using a doctor blade, and cured at a temperature of 80°C to 130°C for 30 minutes to 120 minutes to manufacture the fire-extinguishing foam.

The amount of foaming agent added varies depending on the weight of the silicone resin and the DBDPE-CaCO₃ mixture, and accordingly, the agitation speed and agitation time may be determined, and curing temperature and curing time may be adjusted.

Here, the composition ratio of the halogen-based compound and the inorganic metal compound for the flame retardant may basically be 1:1, and the halogen-based compound may be composed at a higher weight ratio than the inorganic metal compound in consideration of reducing the activity of flammable gases.

Here, a foaming aid may be further mixed with the flame-retardant resin mixture in order to densify the pore structure.

The foaming aid may be composed of one of magnesium sulfate, zeolite, and the like, and may be composed at a weight ratio of 0.5 g relative to 10 g of silicone resin as a reference.

In addition, a second solvent may be further mixed with the flame-retardant resin mixture for the purpose of surface modification. The second solvent may be composed of water.

The second solvent may be composed at a weight ratio of 1 g relative to 10 g of silicone resin as a reference.

In addition, the resin ratio relative to the curing agent may be mixed at a higher ratio in the flame-retardant resin mixture to increase the compressibility. The curing agent may be composed at a weight ratio of 1 g relative to 10 g of silicone resin as a reference.

The method of manufacturing the heat-insulating fire-extinguishing foam for secondary battery cells and modules according to the second embodiment of the present invention may, as shown in Table 1 below, manufacture the fire-extinguishing foam by manufacturing a flame-retardant silicone resin composition suitable for manufacturing the inter-cell and inter-module fire-extinguishing foam by adjusting the ratio of silicone resin, flame retardant (DBDPE-CaCO₃), and foaming agent to produce a fire-extinguishing foam having an optimal heat insulating and fire-extinguishing effect.

### (A) Formation of polymer foam by adding foaming agent

**[Table 1]**

| | Resin (g) | Flame Retardant (g) | Foaming Agent (g) | Expansion Ratio (%) |
|---|---|---|---|---|
| Experiment 1 | 10 | 10 | 0 | 0 |
| Experiment 2 | 10 | 10 | 1 | 150 |
| Experiment 3 | 10 | 10 | 2 | 200 |
| Experiment 4 | 10 | 10 | 3 | 240 |
| Experiment 5 | 10 | 10 | 4 | Not measurable |

Table 1 shows the change in expansion ratio depending on whether a foaming agent is added and the amount added.

The resin, flame retardant, and foaming agent shown in Table 1 above are uniformly mixed to obtain a slurry-type polymer silicone resin mixture, which is then formed to a desired thickness using a doctor blade and cured in an oven at a predetermined temperature for a predetermined period of time to manufacture in the form of a mixed polymer foam.

Here, the ratio of thickness after curing to target thickness at the time of casting may be expressed in the form of an expansion ratio (%).

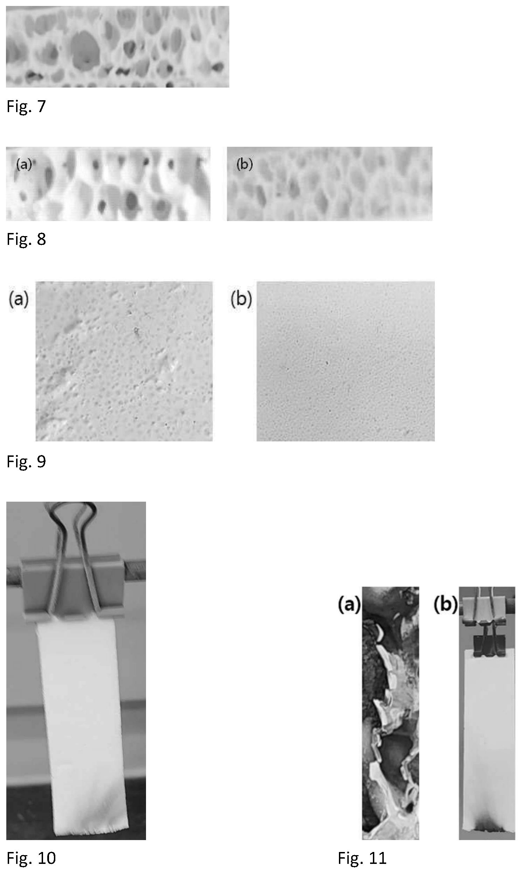

According to this, in the case of Experiment 1 without a foaming agent, a polymer film is manufactured in the form of a sheet without a pore structure, whereas in Experiments 2 to 4 comprising a volatile solvent (foaming agent), it may be observed that a pore structure is developed in the form shown in FIG. 7.

In particular, in the case of Experiment 4, it was confirmed that the product cast to a thickness of 2 mm in the film formation process increased in thickness to 4 mm or more after curing/foaming, confirming the possibility of manufacturing in the form of a foam using the foaming agent.

However, it may be confirmed that the pore distribution is large and non-uniform.

Meanwhile, as a result of confirming the foaming form of the foam according to the change in the amount of foaming agent in Experiments 2 to 4, it may generally be confirmed that the thickness of the foam formed increases with an increase in the foaming agent. However, as in Experiment 5, as a result of adding the foaming agent above a certain point, there may be a situation in which the polymer sheet cannot be manufactured because curing of the polymer does not proceed.

In addition, as the foaming agent increases, the viscosity of the polymer mixture before curing also increases, and a severe increase in viscosity may act disadvantageously in the manufacturing process.

Although the maximum expansion ratio appears in the results of Experiment 4, subsequent optimization experiments are conducted through Experiment 3 to ensure process feasibility.

### (B) Densification of pore structure depending on addition of foaming aid

Based on the results of the non-uniform pore structure, a foaming aid may be added to densify the distribution of the pore structure.

Here, magnesium sulfate was used as the foaming aid, and as a result of experiments with the compositions shown in Table 2 below, it may be confirmed that a more uniformly sized pore structure is obtained with the addition of the auxiliary agent.

At this time, the expansion ratio according to the addition of the foaming aid was not significantly affected. However, in the cases of Experiments 7 and 8, a problem arises in that magnesium sulfate particles used as the foaming aid are observed on the surface. Therefore, the amount of foaming aid needs to be minimized in consideration of the dispersion problem.

**[Table 2]**

| | Resin (g) | Flame Retardant (g) | Foaming Agent (g) | Foaming Aid (g) |
|---|---|---|---|---|
| Experiment 3 | 10 | 10 | 2 | |
| Experiment 6 | 10 | 10 | 2 | 0.5 |
| Experiment 7 | 10 | 10 | 2 | 1 |
| Experiment 8 | 10 | 10 | 2 | 2 |

Table 2 shows the composition of constituent materials in the foaming aid addition experiment.

FIG. 8 shows the change in pore distribution due to the addition of the foaming aid.

(a) shows the pore distribution in Experiment 3 without the foaming aid, and (b) shows the pore distribution in Experiment 6 with the foaming aid added.

### (C) Review of surface property enhancement effect by introduction of second solvent

**[Table 3]**

| | Resin (g) | Flame Retardant (g) | Foaming Agent (g) | Foaming Aid (g) | Second Solvent (g) |
|---|---|---|---|---|---|
| Experiment 6 | 10 | 10 | 2 | | - |
| Experiment 9 | 10 | 10 | 2 | 0.5 | 1 |
| Experiment 10 | 10 | 10 | 2 | 0.5 | 2 |

Table 3 shows the composition of constituent materials in the second solvent introduction experiment.

FIG. 9 shows the surface change of the fire-extinguishing foam due to the introduction of the second solvent. (a) shows the surface of the fire-extinguishing foam in Experiment 6 in which the second solvent is not added, and (b) shows the surface of the fire-extinguishing foam in Experiment 9 in which the second solvent is added.

In the manufacture of the fire-extinguishing foam, as shown in FIG. 9, it may be confirmed that the surface condition changes uniformly with the addition of water as the second solvent.

In the fire-extinguishing foam manufactured through Experiment 3, it was confirmed that undulations like craters are formed on the surface due to the volatilization of the foaming agent as shown in FIG. 9(a), but as shown in FIG. 9(b), it may be confirmed that in Experiment 9 in which the second solvent is introduced, the outer surface of the fire-extinguishing foam maintains a smooth form.

Consequently, the introduction of water as the second solvent is necessary to obtain a surface with a uniform form.

Here, as shown in Table 3, the surface form of the fire-extinguishing foam in Experiments 9 and 10 according to the change in the content of the second solvent was not significantly different. Therefore, for the optimization of the second solvent, the results of Experiment 9, in which the effect is obtained with the smallest amount, may be used for further experiments.

### (D) Change in compressibility of foam according to the ratio of polymer resin to curing agent

**[Table 4]**

| | Resin/Curing Agent Ratio | Compressibility* (%) |
|---|---|---|
| Experiment 11 | 9:1 | 38 |
| Experiment 12 | 10:1 | 44 |
| Experiment 13 | 11:1 | 52 |

Table 4 shows the results of the change in compressibility according to the composition ratio of the polymer curing agent.

Meanwhile, finally, rather than obtaining the compressibility of the manufactured foam (through external pressurization), the change in the compressibility of the fire-extinguishing foam may be attempted through a change in the composition ratio of the resin mixture and the curing agent.

It may be confirmed that as the ratio of curing agent relative to the siloxane-based resin base decreases, the density of the polymer film decreases, and as a result, the fire-extinguishing foam compressibility tends to increase. Therefore, the compressibility of the fire-extinguishing foam may be increased by determining the input amount of the curing agent relative to the resin base.

### (E) Confirmation of flame-retardant properties through flame contact experiment

To evaluate the flame-retardant performance of the fire-extinguishing foam manufactured at the optimal ratio, a UL 94 standard combustion test was simulated by applying a flame to the bottom of a 130 mm×25 mm specimen for 10 seconds, and as a result of measuring the combustion time after flame removal (=SET, self-extinguishing time), flame-retardant properties in which fire does not ignite even after 10 seconds of flame contact were exhibited, as shown in FIG. 5.

FIG. 10 shows the results of the flame-retardant performance evaluation of the fire-extinguishing foam.

FIG. 11 is a view showing a comparison of fire-extinguishing evaluation results of the fire-extinguishing foam and a commercial flame-retardant film.

As shown in FIG. 11, in the case of the commercial flame-retardant film (a), when a flammable material is applied, the fire ignites within 2 seconds and completely burns within 20 seconds, whereas in the case of the fire-extinguishing foam (b), even when a flammable material is applied, an excellent flame-retardant effect is exhibited in which the fire does not ignite at all.

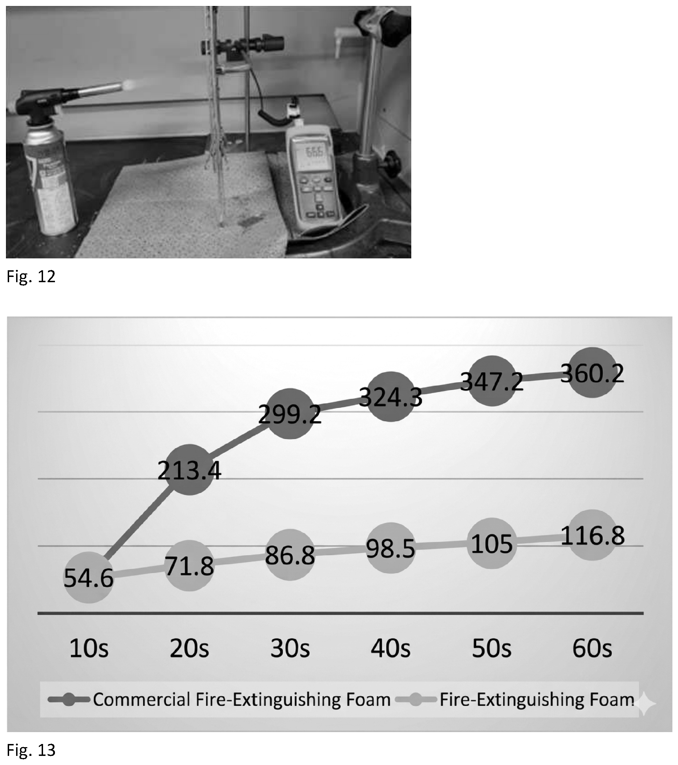

FIG. 12 shows the test method for heat transfer evaluation, and FIG. 13 shows the results of the heat transfer evaluation test as shown in FIG. 12.

A gas torch may be used as shown in FIG. 7 to conduct a flame application evaluation experiment to evaluate the heat transfer prevention capability.

When heat is continuously applied in a situation where the flame does not directly contact the flame-retardant pad, the heat insulating properties of the flame-retardant pad are confirmed by measuring the temperature on the opposite side of the pad. As a result, it may be confirmed that the heat insulating performance of the fire-extinguishing foam of the present invention is excellent, with only an increase of 117°C being observed compared to the commercial sample that reaches 360°C after 60 seconds, and it may be seen that excellent performance is exhibited over a wide range from low to high temperatures.

Although the above has presented and described the test results for manufacturing the fire-extinguishing foam at the optimal ratio and testing with the fire-extinguishing foam manufactured at the optimal ratio as the preferred embodiment of the present invention, the present invention is not limited to the specific embodiments described above, and various modifications may be made by a person skilled in the art to which the present invention pertains without departing from the gist of the present invention as claimed in the claims, and such modifications should not be individually construed from the technical spirit or perspective of the present invention.

## Claims

1. A heat-insulating fire-extinguishing material for secondary batteries comprising a flame-retardant resin mixture, manufactured by:
adding a foaming agent to a flame-retardant resin mixture comprising a siloxane-based silicone resin, a halogen-based flame retardant, and an inorganic metal compound flame retardant and mixing; and
forming into a predetermined shape and curing to be manufactured in a form of a foam having a pore structure with expansion-buffering characteristics.

2. The heat-insulating fire-extinguishing material for secondary batteries according to claim 1, wherein the silicone resin is siloxane-based polydimethylsiloxane (PDMS),
the halogen-based flame retardant is a bromine-based flame retardant (decabromodiphenylethane (DBDPE)), and
the inorganic metal compound is a flame-retardant material comprising at least one selected from the group consisting of oxides, hydroxides, carbonates, sulfates, and phosphates of alkaline earth metals such as magnesium and calcium, Group 3 metals on the periodic table represented by aluminum, or transition metals represented by copper, manganese, and nickel.

3. A heat-insulating fire-extinguishing material for secondary batteries comprising a flame-retardant resin mixture, manufactured by:
mixing 10 g of silicone resin with 10 g of a mixture of a halogen-based flame retardant and an inorganic metal compound, 2 g of foaming agent, 0.5 g of foaming aid, 1 g of second solvent, and 1 g of curing agent, then forming into a predetermined shape and curing to be manufactured in a form of a foam having a pore structure with expansion-buffering characteristics.

4. A method of manufacturing a heat-insulating fire-extinguishing material for secondary batteries comprising a flame-retardant resin mixture, the method comprising:
mixing a halogen-based flame retardant and an inorganic metal compound with a silicone resin;
adding a foaming agent to the silicone resin mixture comprising the halogen-based flame retardant and the inorganic metal compound and uniformly mixing to produce a slurry-type resin mixture;
forming the produced resin mixture into a predetermined shape; and
curing at a predetermined temperature for a predetermined period of time to manufacture in a form of a foam having a pore structure with expansion-buffering characteristics.

5. The method according to claim 4, wherein the method further comprises:
further mixing a foaming aid for densifying the pore structure into the silicone resin mixture comprising the halogen-based flame retardant and the inorganic metal compound.

6. The method according to claim 4, wherein the method further comprises:
further mixing a second solvent for maintaining a uniform surface condition into the silicone resin mixture comprising the halogen-based flame retardant and the inorganic metal compound.

7. The method according to claim 4, wherein the method further comprises:
mixing the silicone resin mixture comprising the halogen-based flame retardant and the inorganic metal compound at a higher resin ratio relative to the curing agent.

8. A method of manufacturing a heat-insulating fire-extinguishing material for secondary batteries comprising a flame-retardant resin mixture, the method comprising:
mixing 10 g of a halogen-based flame retardant-inorganic metal compound with 10 g of silicone resin;
adding 2 g of foaming agent, 0.5 g of foaming aid, 1 g of second solvent, and 1 g of curing agent to the silicone resin mixture comprising the halogen-based flame retardant and the inorganic metal compound and uniformly mixing to produce a slurry-type resin mixture;
forming the produced resin mixture into a predetermined shape; and
curing at a predetermined temperature for a predetermined period of time to manufacture in a form of a foam having a pore structure with expansion-buffering characteristics.
